# EUROPEAN PATENT APPLICATION

(11) **EP 2 787 554 A1**
(43) Date of publication of application: **08.10.2014**
(21) Application number: 13188748.1
(22) Date of filing: 15.10.2013
(51) Int. Cl.: H01M 2/02

(54) **Secondary battery and method of insulating outer surface of secondary battery**

(30) Priority: 05.04.2013 KR 20130037685
(71) Applicant: Samsung SDI Co., Ltd., Yongin-si, Gyeonggi-do (KR)
(72) Inventor: Park, Se-Jong, Gyeonggi-do (KR); Kim, Yongsam, Gyeonggi-do (KR); Kim, Sung-Kab, Gyeonggi-do (KR)
(74) Representative: Walaski, Jan Filip

(57) **Abstract**

A secondary battery and a method of insulating outer surfaces of a secondary battery. A secondary battery includes an electrode assembly including a first electrode plate, a separator, and a second electrode plate; a case having an internal space in which the electrode assembly is accommodated; a cap plate covering the case; a terminal penetrated through the cap plate and electrically connected to the electrode assembly; and an adhesive tape adhered on outer surfaces of the case.

## Description

The present invention relates to a secondary battery and a method of insulating outer surfaces of a secondary battery.

Generally, unlike a primary battery that is incapable of being charged, a secondary battery is capable of being charged and discharged. A secondary battery may be used as an energy source of a mobile device, an electric car, a hybrid car, an electric bicycle, an uninterruptible power supply apparatus, or the like. A secondary battery may be used in a single battery type or a battery module type, according to the type of an applied external device. In the case of the battery module type, a plurality of batteries may be electrically connected to each other in one unit by using a bus bar.

The secondary battery includes an electrode assembly including a positive plate, a separator, and a negative plate, a case in which the electrode assembly is stored, a cap plate covering the case, and a terminal electrically exposing the electrode assembly externally. The case may be in a can form or a pouch form formed of a metal material such as aluminum, in which an insulating layer is formed on outer surfaces of the case to secure insulation from outside. A spray method or a dipping method may be used for coating the insulating layer, and during such after-treatment processes, there is a need for securing reliability and electrical stability without affecting the lifespan of the battery.

According to aspects of embodiments of the present invention, a secondary battery and a method of insulating outer surfaces of a secondary battery are provided.

A secondary battery according to one or more embodiments of the present invention includes: an electrode assembly including a first electrode plate, a separator, and a second electrode plate; a case having an internal space in which the electrode assembly is accommodated; a cap plate covering the case; a terminal penetrated through the cap plate and electrically connected to the electrode assembly; and an adhesive tape adhered on outer surfaces of the case.

In one embodiment, no coating layer for insulation other than the adhesive tape is formed on the outer surfaces of the case.

The case may have a rectangular cross-sectional shape, and the outer surfaces of the case may include a bottom surface having a rectangular shape, and a first surface, a second surface, a third surface and a fourth surface that surround the bottom surface and form the internal space.

The adhesive tape may be continuously adhered from the first surface to the second surface facing the first surface via the bottom surface. The first surface and the second surface may be a front surface and a back surface that are wider surfaces among the outer surfaces of the case.

The outer surfaces may include one or more regions where two or more layers of the adhesive tape are overlapped on one or more of the third surface and the fourth surface. The one or more regions may extend upward by a length from a side that contacts the bottom surface and have three layers of the adhesive tape overlapping one another.

The adhesive tape, in an unfolded state, may include: first, second, third, fourth, and fifth regions corresponding to the bottom surface, the first surface, the second surface, the third surface, and the fourth surface, respectively; and an overlapping region corresponding to at least a portion of the bottom surface, the first surface, the second surface, the third surface, or the fourth surface, in an overlapping manner.

The overlapping region may include a region corresponding to the third surface, which has a narrow width among the first surface, the second surface, the third surface, and the fourth surface surrounding the bottom surface. The overlapping region may further include a region corresponding to the fourth surface facing the third surface.

The overlapping region may further include a region corresponding to a region that extends upward by a length from a side that contacts the bottom surface among regions of the third surface. The overlapping region may further include a region corresponding to a region that extends upward by a length from a side that contacts the bottom surface among regions of the fourth surface.

The adhesive tape, in an unfolded state, may be rectangular.

The secondary battery may be charged and discharged by a movement of lithium ions between the first electrode plate and the second electrode plate.

The adhesive tape may include a film formed of a material selected from polyethylene terephthalate (PET), polyimide (PI), and polypropylene (PP), and coated with an adhesive agent.

An insulation resistance of the secondary battery may be 1 GΩ, or greater.

According to another embodiment of the present invention, a method of insulating outer surfaces of a case of a secondary battery including an electrode assembly accommodated in an internal space of the case, a cap plate covering the case, and a terminal penetrated through the cap plate and electrically connected to the electrode assembly includes wrapping a plurality of surfaces including the outer surfaces of the case with an adhesive tape.

The method of insulating the outer surfaces of the case may include no insulation treatment process other than the wrapping the plurality of surfaces with the adhesive tape.

The case may have a rectangular cross-sectional shape, and the outer surfaces of the case may include a bottom surface having a rectangular shape, and a first surface, a second surface, a third surface, and a fourth surface that surround the bottom surface and form the internal space of the case, and one or more regions adjacent to the bottom surface among the first surface, the second surface, the third surface, and the fourth surface may have two or more layers of the adhesive tape overlapping one another.

The one or more regions may include a finishing location where the adhesive tape wraps the outer surfaces of the rectangular case.

The adhesive tape, in an unfolded state, may include: first, second, third, fourth, and fifth regions corresponding to the bottom surface, the first surface, the second surface, the third surface, and the fourth surface, respectively; and an overlapping region corresponding to at least a portion of the bottom surface, the first surface, the second surface, the third surface, or the fourth surface, in an overlapping manner.

The adhesive tape, in an unfolded state, may be rectangular.

The above and other features and aspects of the present invention will become more apparent by describing in further detail some exemplary embodiments thereof with reference to the attached drawings in which:
FIG. 1 is an exploded perspective view illustrating a structure of a secondary battery according to an embodiment of the present invention;
FIG. 2 is a perspective view illustrating an electrode assembly of the secondary battery of FIG. 1, showing the electrode assembly in an unfolded state;
FIGS. 3A to 3E illustrate a method of insulating a case of a secondary battery according to an embodiment of the present invention;
FIGS. 4A to 4C illustrate a method of insulating a case of a secondary battery according to another embodiment of the present invention;
FIGS. 5A to 5C illustrate a method of insulating a case of a secondary battery according to another embodiment of the present invention;
FIG. 6 illustrates a method of measuring an insulation resistance of a secondary battery according to an embodiment of the present invention;
FIG. 7 is an exploded perspective view illustrating a structure of a secondary battery according to another embodiment of the present invention; and
FIG. 8 is a perspective view illustrating an electrode assembly of the secondary battery of FIG. 7, showing the electrode assembly in an unfolded state.

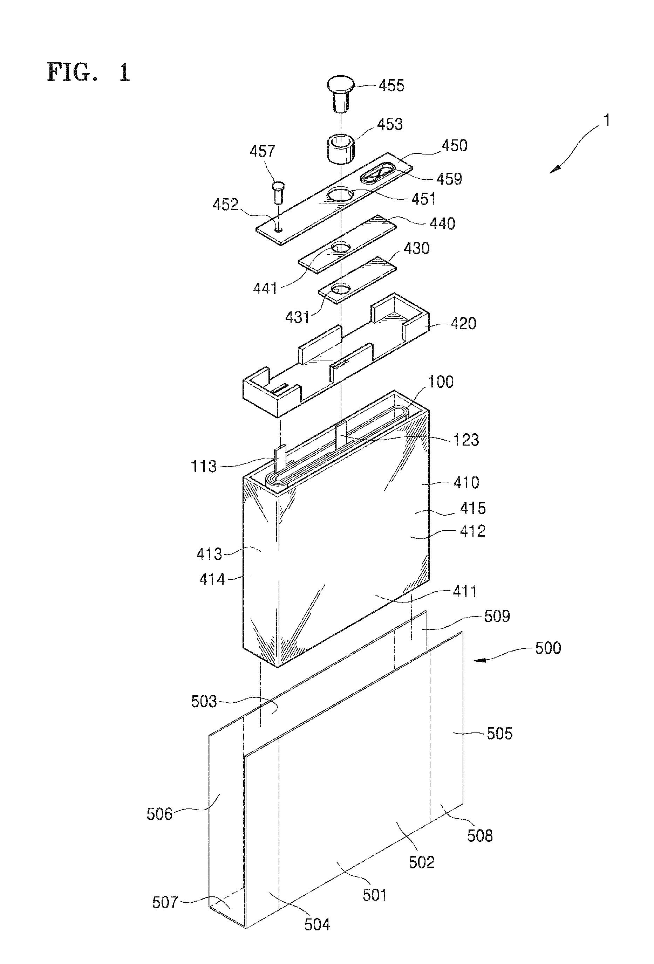

Referring to FIG. 1, a secondary battery 1 according to an embodiment of the present invention includes an electrode assembly 100, a can 410 having an internal space in which the electrode assembly 100 is stored, or accommodated, a cap plate 450 for covering the can 410 wherein the cap plate 450 has a terminal inserting unit penetrated from the top to the bottom to insert an electrode tab for externally exposing the electrode assembly 100, and an adhesive tape 500 adhered on outer surfaces of the can 410.

The secondary battery 1 according to an embodiment of the present invention provides a structure for effectively insulating the outer surfaces of the can 410 in which the electrode assembly 100 is stored by using a simple method. In one embodiment, no insulating member (e.g., an insulating coating layer or the like) other than the adhesive tape 500 is formed on the outer surfaces of the can 410.

The secondary battery 1 is described in further detail below.

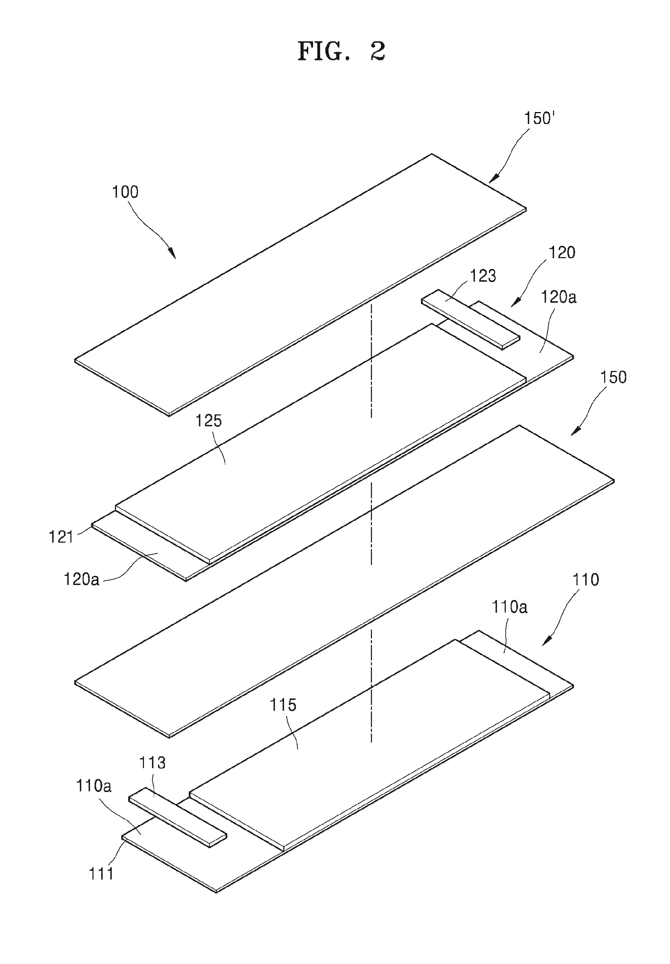

Referring to FIG. 2, the electrode assembly 100 includes a first electrode plate 110 and a second electrode plate 120 extended in one direction in a form of a band, and a separator 150 interposed therebetween to be laminated facing each other.

The first electrode plate 110 may include a first electrode current collector 111 and a first electrode active material 115 formed on at least one surface of the first electrode current collector 111. The first electrode current collector 111 provides a transfer pathway for electric charges generated from the first electrode active material 115 and supports the first electrode active material 115. In one embodiment, for example, the first electrode plate 110 may function as a positive electrode, and the first electrode current collector 111 may include aluminum or an aluminum alloy.

The first electrode active material 115, in one embodiment, may be formed by dispersing an electrode composition including an electrode active material, a binder, a conducting material, or the like in a solvent to prepare a slurry, coating the slurry on at least one surface of the first electrode current collector 111, and drying and pressuring the same.

A non-coated (uncoated) portion 110a in which the first electrode active material 115 is not coated may be formed on the first electrode 110. For example, the first electrode active material 115 may not be coated on both ends located in a lengthwise direction of the first electrode plate 110, and thus, the non-coated portion 110a in which the first current collector 111 is exposed may be formed. A first electrode tab 113 is formed on the non-coated portion 110a to externally withdraw electrons that are formed from a chemical reaction. For example, the first electrode tab 113 may couple with a non-coated portion 110a among the non-coated portions 110a of the first electrode 110, and may be coupled by ultrasonic welding, for example. The first electrode tab 113 may function as a positive electrode tab and may include aluminum or an aluminum alloy.

The second electrode plate 120 may include a second electrode current collector 121 and a second electrode active material 125 formed on at least one surface of the second electrode current collector 121. The second electrode current collector 121 provides a transfer pathway for electric charges generated from the second electrode active material 125 and supports the second electrode active material 125. In one embodiment, for example, the second electrode plate 120 may function as a negative electrode, and the second electrode current collector 121 may include copper or a copper alloy.

The second electrode active material 125, in one embodiment, may be formed by dispersing an electrode composition including an electrode active material, a binder, a conducting material, or the like in a solvent to prepare a slurry, coating the slurry on at least one surface of the second electrode current collector 121, and drying and pressuring the same.

A non-coated portion 120a in which the second electrode active material 125 is not coated may be formed on the second electrode 120. For example, the second electrode active material 125 may not be disposed on both ends located in a lengthwise direction of the second electrode plate 120, and thus, the non-coated portion 120a in which the second current collector 121 is exposed may be formed. A second electrode tab 123 is formed on the non-coated portion 120a to externally withdraw electrons that are formed from a chemical reaction. For example, the second electrode tab 123 may couple with a non-coated portion 120a among the non-coated portions 120a of the second electrode 120, and may be coupled by ultrasonic welding, for example. The second electrode tab 123 may function as a negative electrode tab and may include copper or a copper alloy.

The separator 150 is interposed between the first electrode plate 110 and the second electrode plate 120 to be laminated facing each other. The separator 150 prevents or substantially prevents a short circuit between a cathode and an anode. The separator 150 may be formed of a porous film having high ion permeability and high mechanical strength and may be formed of an olefin-based polymer, such as polyethylene or polypropylene. In one embodiment, the separator 150 may be longer in lengthwise or widthwise directions than the first electrode plate 110 and the second electrode plate 120 to prevent or substantially prevent a short circuit of the first electrode plate 110 and the second electrode plate 120 caused by thermal contraction. In one embodiment, another separator 150' may be on a side of the second electrode plate 120 opposite the separator 150.

Referring to FIG. 1, the electrode assembly 100 is stored in a battery case and the battery case may be the can 410 having a rectangular or generally rectangular cross-sectional shape, for example, as illustrated in FIG. 1. A top opening of the can 410 may be sealed by the cap plate 450.

In one embodiment, the cap plate 450 may electrically connect to the first electrode tab 113 that extends out by penetrating an insulating case 420, and an electrode terminal 455 that electrically connects to the second electrode tab 123 may be assembled on the cap plate 450. An insulating gasket 453 may be interposed between the electrode terminal 455 and the cap plate 450 to be assembled on a terminal inserting unit 451 of the cap plate 450.

A terminal plate 430 electrically connected to the electrode terminal 455 may be located on the bottom of the cap plate 450, and an insulating plate 440 may be interposed between the cap plate 450 and the terminal plate 430 to secure electrical insulation therebetween. For example, the electrode terminal 455 may penetrate terminal holes 441 and 431 formed on the insulating plate 440 and the terminal plate 430, respectively, to electrically connect to the second electrode tab 123. On one side of the cap plate 450, a breakable safety vent 459 may be formed to provide a pathway for discharging gas when an internal pressure exceeds a set point (e.g., a reference pressure), and an electrolyte inlet 452 may be formed on the cap plate 450 to insert or inject an electrolyte. The electrolyte inlet 452 may be sealed by a sealing member 457.

The secondary battery 1 may be a lithium ion battery in which a charge and discharge occurs due to a movement of lithium ions between the first electrode plate 110 and the second electrode plate 120. In this case, for the first electrode active material 115 and the second electrode active material 125, a lithium metal oxide may be used as a positive electrode active material, and carbon or a carbon complex may be used as a negative electrode active material, and an electrolyte of lithium salt dissolved in an organic solvent may be inserted or impregnated in the can 410 along with the electrode assembly 100.

In one embodiment, outer surfaces of the can 410 may be rectangular or generally rectangular and, as illustrated in FIG. 1, may include a bottom surface 411, and a first surface 412, a second surface 413, a third surface 414, and a fourth surface 415 that cover or extend from the bottom surface 411 and form an internal space in which the electrode assembly 100 is stored.

The adhesive tape 500, in one embodiment, may be a plastic-based film such as polyethylene terephthalate (PET), polyimide (PI), or polypropylene (PP) coated with an adhesive agent.

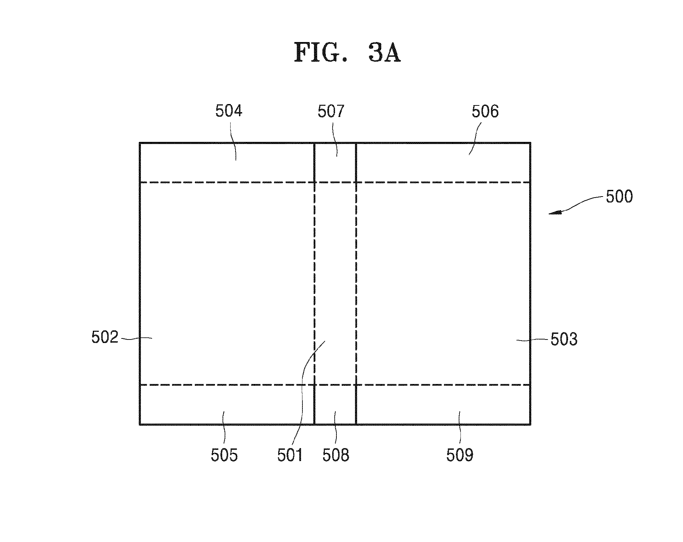

In FIG. 1, the adhesive tape 500 is illustrated in a perspective view in which a portion of the adhesive tape 500 is unfolded, and the adhesive tape 500 may continuously adhere from the first surface 412 via the bottom surface 411 to the second surface 413 facing the first surface 412. One or more sides of the can 410, such as the third surface 414, the fourth surface 415, and portions of the bottoms of the third surface 414 and the fourth surface 415 may have a plurality of layers of the adhesive tape 500 adhered thereon and this will be described in greater detail with reference to FIG. 3A and the following drawings.

FIGS. 3A to 3E illustrate a method of insulating a case of a secondary battery according to an embodiment of the present invention.

According to an embodiment of the present invention, in a method of insulating a case of a secondary battery, a plurality of surfaces forming external surfaces of a case, such as the can 410 described above, are wrapped with the adhesive tape 500 for insulating the can 410 of a secondary battery, and no other separate insulation treatment process is performed.

Referring to FIG. 3A, the adhesive tape 500 is prepared. The adhesive tape 500 may be a plastic-based film such as polyethylene terephthalate (PET), polyimide (PI), or polypropylene (PP) coated with an adhesive agent. An expanded view of the adhesive tape 410, that is, in an unfolded state, includes a first region 501, a second region 502, a third region 503, a fourth region 504, and a fifth region 505 corresponding to a bottom surface, a first surface, a second surface, a third surface, and a fourth surface (e.g., the bottom surface 411, the first surface 412, the second surface 413, the third surface 414, and the fourth surface 415, respectively, of the can 410 described above), and further includes overlapping regions 506, 507, 508, and 509 corresponding to some portions of a bottom surface, a first surface, a second surface, a third surface, and a fourth surface (e.g., the bottom surface 411, the first surface 412, the second surface 413, the third surface 414, and the fourth surface 415, respectively, of the can 410) in an overlapping manner. Here, distinguishing the regions corresponding to the outer surfaces of the can 410 and the overlapping regions is an example designation for convenience, and regions 506 and 507 may correspond to the third surface and the fourth surfaces, respectively, while the regions 504 and 505 are the overlapping regions. The expanded view of the adhesive tape 500 may be in a rectangular form as illustrated in FIG. 3A. However, the expanded view of the adhesive tape 500 is not limited thereto.

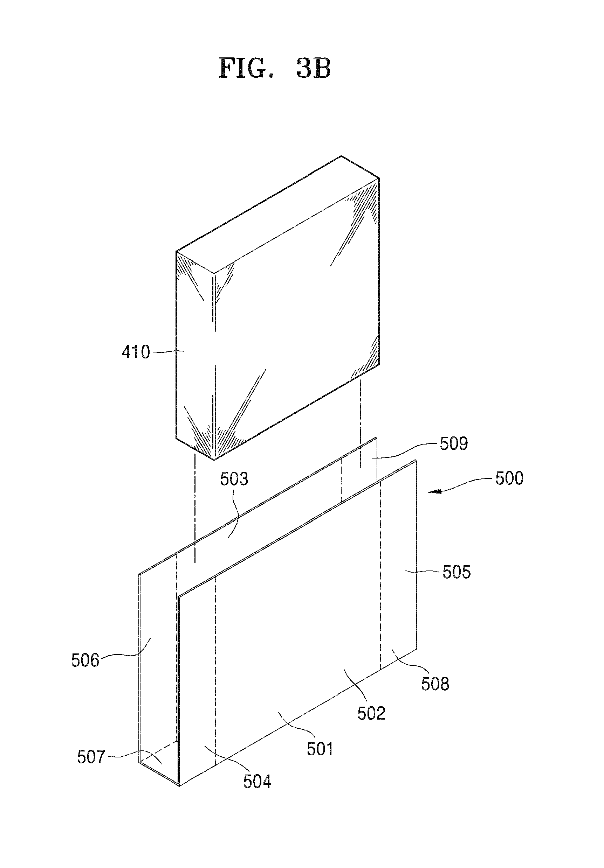

As illustrated in FIG. 3B, the adhesive tape 500 is adhered to the can 410 such that the adhesive tape 500 wraps from the front surface, i.e. the first surface 412, via the bottom surface 411 to the back surface, i.e. the second surface 413, facing the front surface. Hence, the first region 501, the second region 502, and the third region 503 are respectively adhered to the bottom surface, the front surface, and the back surface of the can 410.

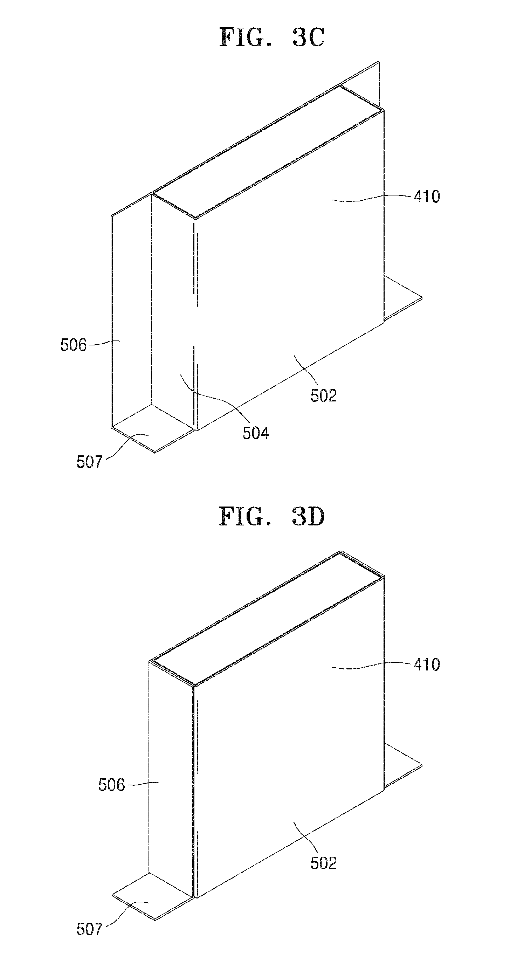

Thereafter, as illustrated in FIG. 3C, the fourth region 504 is folded and adhered to a side, i.e. the third surface 414, of the can 410. For this, a cutting line may be formed on a border of the overlapping region 506 and the adjacent overlapping region 507 beforehand.

Thereafter, as illustrated in FIG. 3D, the overlapping region 506 is folded and adhered to a side, i.e. the third surface 414, of the can 410 in an overlapping manner. For this, a cutting line may be formed on the overlapping region 506 and the adjacent overlapping region 507 beforehand.

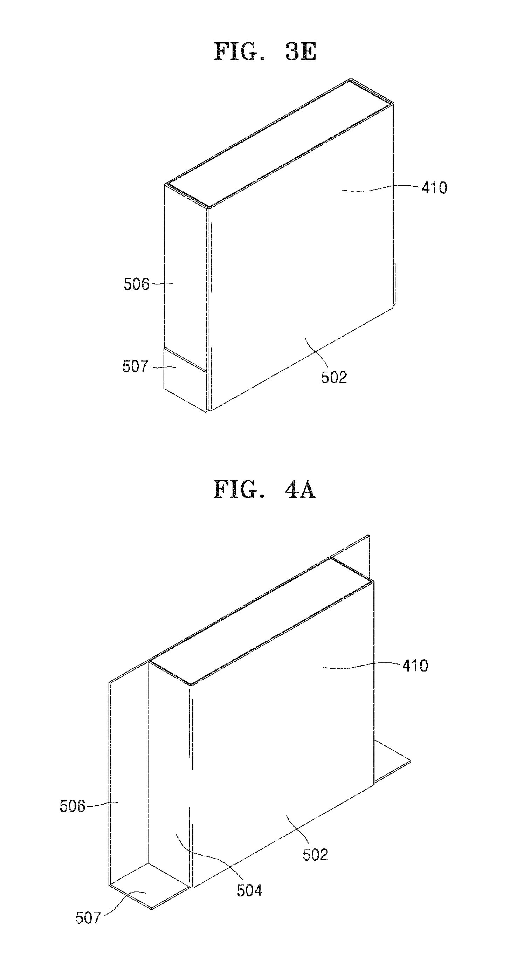

Thereafter, as illustrated in FIG. 3E, the overlapping region 507 is folded toward and adhered to a bottom portion of the side, i.e. the third surface 414, of the can 410.

As a result of the process, the outer surfaces of the can 410 are wrapped with the adhesive tape 500, and also, portions of regions adjacent to the bottom surface 411 of the can 410 may be wrapped with more than two layers of the adhesive tape 500. In one embodiment, a bottom portion of a side of the can 410 has three layers of the adhesive tape 500, and all three layers are adhered from different directions, and thus, a bottom corner of the can 410 is completely sealed.

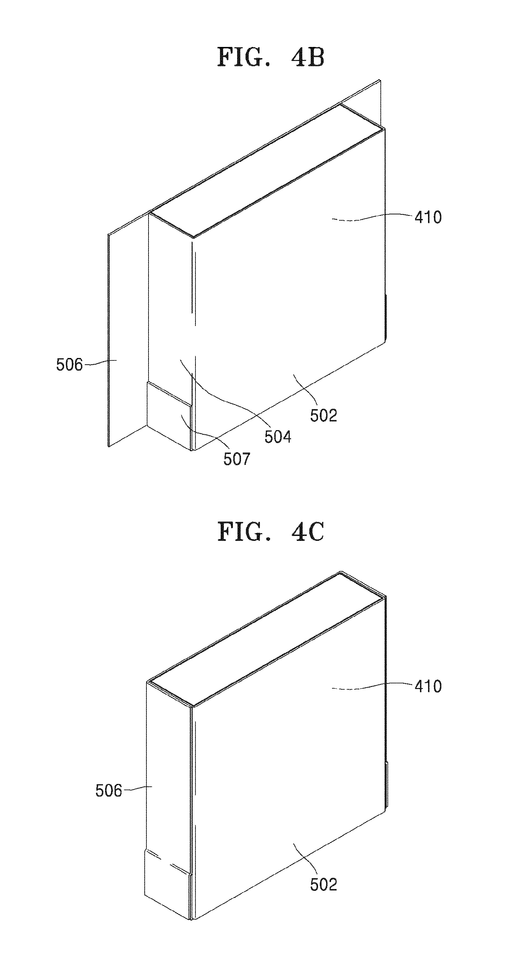

FIGS. 4A to 4C illustrate a method of insulating a case of a secondary battery according to another embodiment of the present invention.

The present embodiment is different from the previously described embodiment only in the order of wrapping the adhesive tape 500 on the outer surfaces of the can 410 and finishing a bottom corner of the can 410. In the embodiment shown in FIGS. 4A through 4C, the fourth region 504 is folded and adhered to a side, i.e. the third surface 414, of the can 410, the adjacent overlapping region 507 is folded and adhered, and then the overlapping region 506 is folded and adhered.

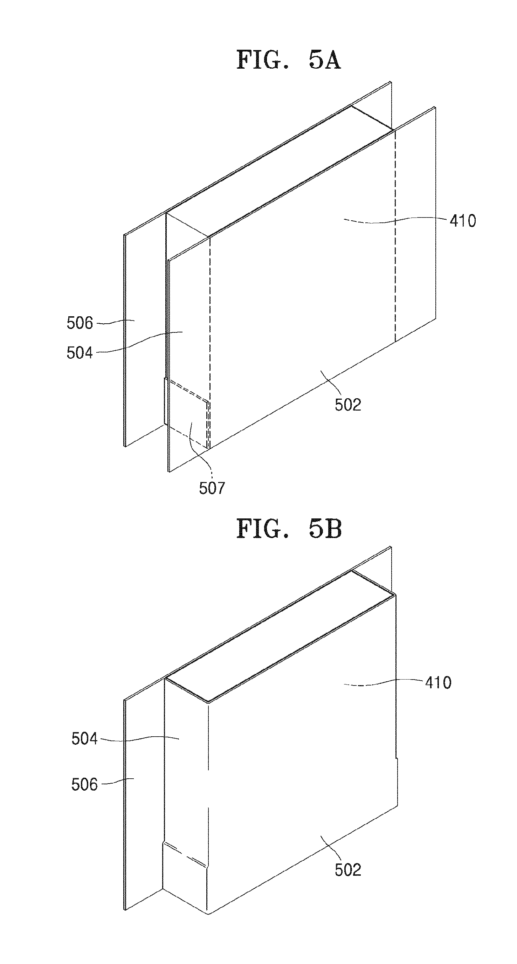

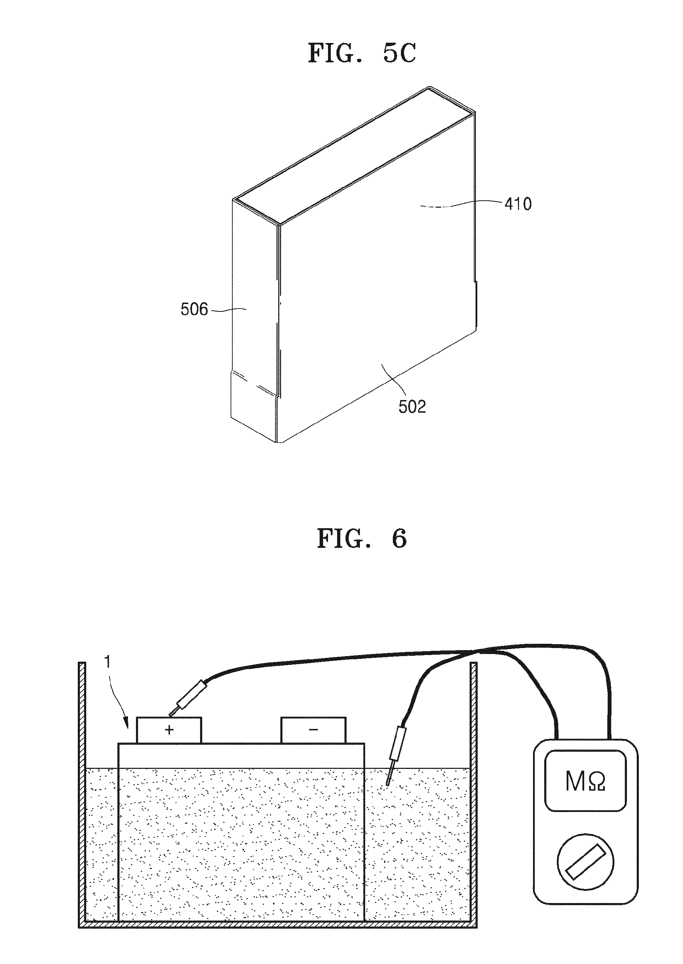

FIGS. 5A to 5C illustrate a method of insulating a case of a secondary battery according to another embodiment of the present invention.

The present embodiment is also different from the previously described embodiments only in the order of wrapping the adhesive tape 500 on the outer surfaces of the can 410 and finishing a bottom corner of the can 410. In the embodiment shown in FIGS. 5A through 5C, the region 507 is folded and adhered to a bottom portion of a side, i.e. the third surface 414, of the can 410, the adjacent fourth region 504 is folded and adhered, and then the overlapping region 506 is folded and adhered thereto.

The secondary battery 1 manufactured according to one of the processes described above has some portions adjacent to a bottom surface among a first region, a second region, a third region, and a fourth region wrapping a bottom surface of the can 410, which have two or more layers of the adhesive tape 500 overlapping one another. For example, the adhesive tape 500 may adhere in a plurality of layers folded from different locations at a finishing location where the adhesive tape 500 wraps the can 410, thereby completely sealing the outer surfaces, specifically, a bottom corner of the can 410 of the secondary battery 1, and thus, the can 410 may have high insulation resistance of 1 GΩ or greater.

In the above description, the finishing location for adhering the adhesive tape 500 to the can 410 was described in particular with respect to one surface; however, the same process may be repeated with respect to the opposite surface, i.e. the fourth surface 415, of the can 410. Also, a finishing method used on the opposite surface may be the same or may be changed to one of the forms described above.

FIG. 6 illustrates a method of measuring an insulation resistance of a secondary battery according to an embodiment of the present invention.

For the measurement, a chamber capable of changing temperature of a lithium ion secondary battery from a low temperature to a high temperature was used, and the lithium ion secondary battery was alternately maintained at -5°C for 1 hour and then at 35°C and humidity of 85%, and the same process was repeated 10 times. Thereafter, a water bath made of insulating layers was filled with water and the secondary battery 1 was soaked such that a cap plate and a terminal of the secondary battery 1 were not soaked. An insulation resistance of outer surfaces of the secondary battery 1 was measured to be about 1.5 GΩ, a very large insulation resistance value considering that an insulation resistance of a lithium ion secondary battery is generally about a few or a few hundred MΩ. This illustrates that a bottom corner of a can may be sealed very well only by using a taping method as described with respect to embodiments of the present invention, which involves wrapping the adhesive tape 500 on the outer surfaces of the can.

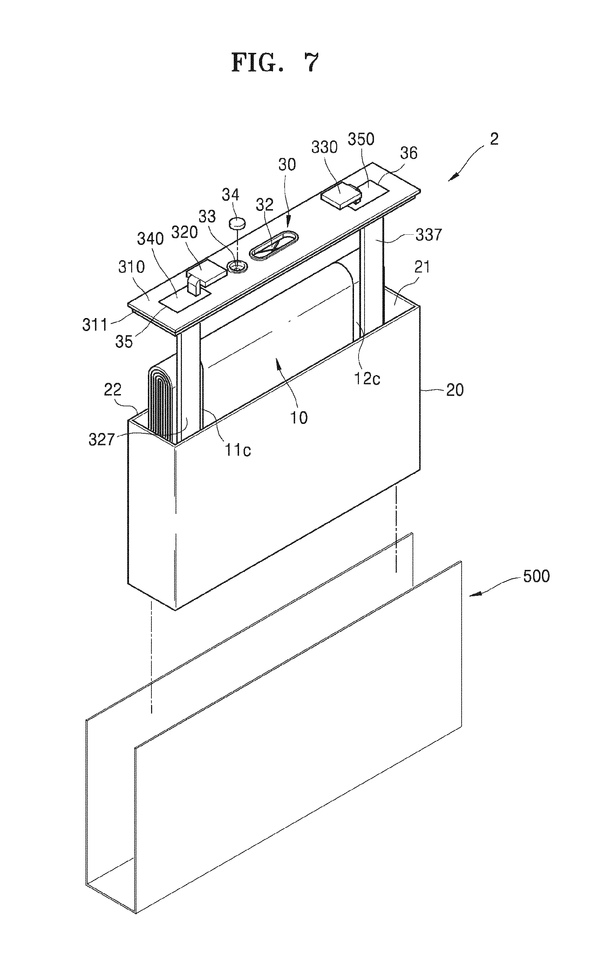

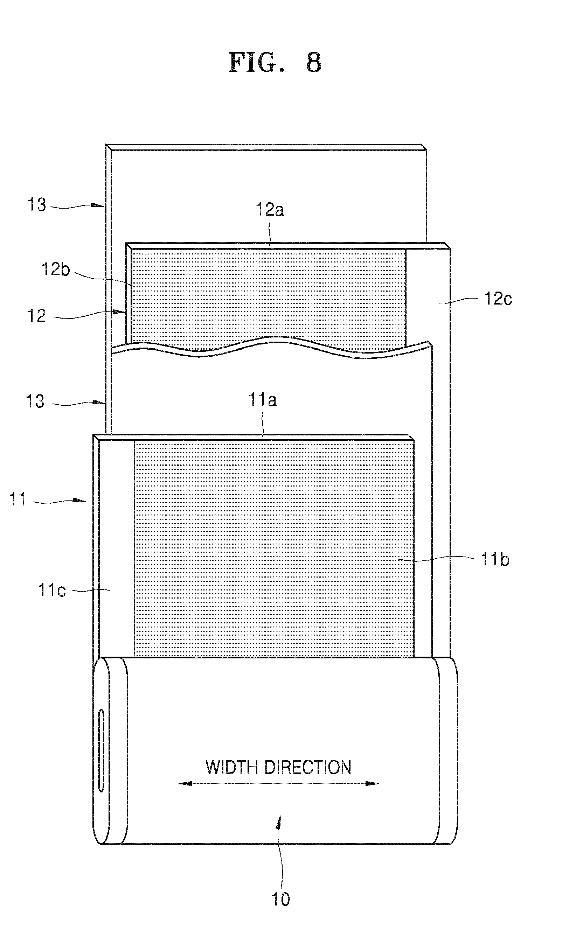

FIG. 7 is an exploded perspective view illustrating a structure of a secondary battery according to another embodiment of the present invention; and FIG. 8 is a perspective view illustrating an electrode assembly of the secondary battery of FIG. 7, the electrode assembly shown in an unfolded state.

A secondary battery 2 according to another embodiment of the present invention includes an electrode assembly 10, a case, such as a can 20, in which the electrode assembly 10 is stored, or accommodated, and a cap plate 310 for covering the can 20, wherein the cap plate 310 has a terminal inserting unit penetrated from the top to the bottom to insert an electrode tab for externally exposing the electrode assembly 100, and an adhesive tape 500 adhered on outer surfaces of the can 20.

The secondary battery 2 is different from the secondary battery 1 described above with reference to FIG 1 regarding a direction in which a first electrode plate 11, a separator 13, and a second electrode plate 12 are wound, a structure externally exposing an electrode tab, and a finishing structure using the cap plate 310. However, using the adhesive tape 500 for effectively insulating outer surfaces of the can 20 in which the electrode assembly 10 is stored by using a simple method is the same as described above with respect to the secondary battery 1.

Referring to FIG. 8, the electrode assembly 10 includes a first electrode plate 11, a second electrode plate 12, and a separator 13 interposed between the first electrode plate 11 and the second electrode plate 12. For example, a laminated structure of the first electrode plate 11, the second electrode plate 12, and the separator 13 may be wound in a jelly roll form.

The first electrode plate 11, in one embodiment, includes a first current collector 11a and a first active material layer 11b formed on at least one surface of the first current collector 11a. A first non-coated portion 11c in which the first active material layer 11b is not formed is provided on an edge portion along a widthwise direction of the first current collector 11a. The second electrode plate 12 includes a second current collector 12a and a second active material layer 12b formed on at least one surface of the second current collector 12a. A second non-coated portion 12c in which the second active material layer 12b is not formed is provided on an edge portion along a widthwise direction of the second current collector 12a. The first non-coated portion 11c and the second non-coated portion 12c may be located separately from each other. For example, the first non-coated portion 11c and the second non-coated portion 12c may be located on both edges of a widthwise direction of the electrode assembly 10.

Referring to FIG. 7, a cap assembly 30 couples with the electrode assembly 10, seals the top of the can 20, and may include fixing members 340 and 350, fixing each of electrode tabs 327 and 337 electrically connected to the cap plate 310 and the electrode assembly 10, and positive and negative terminals 320 and 330 on the cap plate 310.

An opening 21 is provided on the can 20 for inserting the electrode assembly 10, and the cap plate 310 couples with the can 20, to close the opening 21. In one embodiment, an edge 311 of the cap plate 310 connects to a top edge 22 of the can 20 having the opening 21. Then, the cap plate 310 is coupled with the can 20, such as by laser welding or the like, to form a housing in which the electrode assembly 10 is stored.

The positive electrode terminal 320 and the negative electrode terminal 330 electrically connect to the first non-coated layer 11c and the second non-coated layer 12c via the electrode tabs 327 and 337, respectively. Terminal inserting units 35 and 36 are formed by penetrating the cap plate 310 from the top to the bottom. The electrode tabs 327 and 337 of the positive electrode terminal 320 and the negative electrode terminal 330 are each inserted into the terminal inserting units 35 and 36, and are fixed on the cap plate 310 by a positive electrode fixing member 340 and a negative electrode fixing member 350. The fixing members 340 and 350 may be formed of, for example, electrical insulating plastic.

While the cap assembly 30 and the electrode assembly 10 are coupled together, the electrode assembly 10 is inserted into the case 20 via the opening 22, and the cap plate 310 is then coupled with the case 20 by, for example, laser welding, thereby closing the opening 22, and electrically exposing the electrode assembly 10 out of the case 20 by the positive electrode terminal 320 and the negative electrode terminal 330.

A breakable safety vent 32 may be formed on the cap plate 30 for providing a pathway for discharging gas when an internal pressure in the can 20 exceeds a set point (e.g., a reference pressure). An electrolyte solution inlet 33 may be formed on the cap plate 30 for injecting an electrolyte solution into the can 20. After injecting the electrolyte solution, the electrolyte solution inlet 33 is closed by a sealing cap 34.

The secondary battery 2 may be a lithium ion secondary battery that is charged and discharged by a movement of lithium ions between the first electrode plate 11 and the second electrode plate 12. In this case, for example, a lithium metal oxide may be used as a positive electrode material, and carbon or a carbon complex may be used as a negative electrode material of the first active material layer 11b and the second active material layer 12b, and an electrolyte of lithium salt dissolved in an organic solvent may be inserted or impregnated in the can 20 along with the electrode assembly 10.

Outer surfaces of the can 20 may include a rectangular or generally rectangular bottom surface, and four surfaces that surround or extend from the bottom surface to form an internal space in which the electrode assembly 10 may be stored.

The adhesive tape 500 may be a plastic-based film, such as polyethylene terephthalate (PET), polyimide (PI), or polypropylene (PP) coated with an adhesive agent.

The adhesive tape 500 is provided to wrap the outer surfaces of the can 20, and among four surfaces that wrap the bottom surface of the can 20, some regions adjacent to the bottom surface may have two or more layers of the adhesive tape 500 overlapping one another. Hence, as described in FIGS 3A to 5C, a finishing location in which the adhesive tape 500 wraps the outer surfaces of the can, for example, among the four surfaces wrapping the bottom surface of the can 20, some regions adjacent to the bottom surface have a plurality of layers of the adhesive tape 500 overlapping one another, and are folded and adhered from different directions to completely seal a bottom corner of the can 20.

A secondary battery according to embodiments of the present invention, as described above, uses a method of wrapping an adhesive tape around outer surfaces of a case, or can, and thus, uses a simple process and has a high productivity.

Also, there is minimal or no concern for a decreased lifespan of a battery because after-treatment methods for forming an insulation coating layer, such as spraying or dipping methods, are not used except for wrapping and adhering an adhesive tape.
Also, a bottom corner of a can is finished by using an adhesive surface from different directions, and thus, a sealing effect is great and an insulation resistance of a secondary battery is high.

While the present invention has been particularly shown and described with reference to some exemplary embodiments thereof, it will be understood by those of ordinary skill in the art that various changes in form and details may be made therein without departing from the scope of the present invention as defined by the following claims.

## Claims

1. A secondary battery comprising:
an electrode assembly comprising a first electrode plate, a separator, and a second electrode plate;
a case having an internal space in which the electrode assembly is accommodated;
a cap plate covering the case;
a terminal penetrating through the cap plate and electrically connected to the electrode assembly; and
an adhesive tape adhered on outer surfaces of the case.

2. The secondary battery of claim 1, wherein no coating layer for insulation other than the adhesive tape is formed on the outer surfaces of the case.

3. The secondary battery of claim 1 or 2, wherein the case has a rectangular cross-sectional shape, and the outer surfaces of the case comprise a bottom surface having a rectangular shape, and a first surface, a second surface, a third surface, and a fourth surface that surround the bottom surface and form the internal space.

4. The secondary battery of claim 3, wherein the adhesive tape is continuously adhered from the first surface to the second surface facing the first surface via the bottom surface.

5. The secondary battery of claim 4, wherein the first surface and the second surface comprise a front surface and a back surface that are wider surfaces among the outer surfaces of the case and/or wherein the outer surfaces comprise one or more regions where two or more layers of the adhesive tape are overlapped on one or more of the third surface and the fourth surface.

6. The secondary battery of claim 5, wherein the one or more regions extend upward by a length from a side that contacts the bottom surface and have three layers of the adhesive tape overlapping one another.

7. The secondary battery of any one of claims 3 to 6, wherein the adhesive tape, in an unfolded state, comprises:
first, second, third, fourth, and fifth regions corresponding to the bottom surface, the first surface, the second surface, the third surface, and the fourth surface, respectively; and
an overlapping region corresponding to at least a portion of the bottom surface, the first surface, the second surface, the third surface, or the fourth surface, in an overlapping manner.

8. The secondary battery of claim 7, wherein the overlapping region comprises a region corresponding to the third surface, which has a narrow width among the first surface, the second surface, the third surface, and the fourth surface surrounding the bottom surface, wherein the overlapping region may further comprise a region corresponding to the fourth region facing the third region; or wherein the overlapping region may further comprise a region corresponding to a region that extends upward by a length from a side that contacts the bottom surface among a region of the third and/or the fourth surface.

9. The secondary battery of any one of claims 3 to 8, wherein the adhesive tape, in an unfolded state, is rectangular.

10. The secondary battery of any one of the preceding claims, wherein the adhesive tape comprises a film formed of a material selected from polyethylene terephthalate (PET), polyimide (PI), and polypropylene (PP), and coated with an adhesive agent.

11. The secondary battery of any one of the preceding claims, wherein an insulation resistance is 1 GΩ or greater.

12. A method of insulating outer surfaces of a case of a secondary battery, the secondary battery including an electrode assembly accommodated in an internal space of the case, a cap plate covering the case, and a terminal penetrated through the cap plate and electrically connected to the electrode assembly, the method comprising:
wrapping a plurality of surfaces comprising the outer surfaces of the case with an adhesive tape.

13. The method of claim 12, wherein the method of insulating the outer surfaces of the case includes no insulation treatment process other than the wrapping the plurality of surfaces with the adhesive tape.

14. The method of claim 12 or 13, wherein the case has a rectangular cross-sectional shape, and the outer surfaces of the case comprise a bottom surface having a rectangular shape, and a first surface, a second surface, a third surface, and a fourth surface that surround the bottom surface and form the internal space of the case, and
wherein one or more regions adjacent to the bottom surface among the first surface, the second surface, the third surface, and the fourth surface have two or more layers of the adhesive tape overlapping one another.

15. The method of claim 14, wherein the one or more regions comprise a finishing location where the adhesive tape wraps the outer surfaces of the rectangular case, or
wherein the adhesive tape, in an unfolded state, comprises:
first, second, third, fourth, and fifth regions corresponding to the bottom surface, the first surface, the second surface, the third surface, and the fourth surface, respectively; and
an overlapping region corresponding to at least a portion of the bottom surface, the first surface, the second surface, the third surface, or the fourth surface, in an overlapping manner.
